Europäisches Patentamt

**European Patent Office**

Office européen des brevets

(19)

(11) Numéro de publication: **0 069 658**
**B1**

(12) # FASCICULE DE BREVET EUROPEEN

(45) Date de publication du fascicule du brevet:
17.04.85

(51) Int. Cl.⁴: **B 60 T 11/28**

(21) Numéro de dépôt: **82401233.0**

(22) Date de dépôt: **01.07.82**

(54) **Soupape de maintien de pression résiduelle pour un ensemble générateur de pression pour installation de freinage hydraulique.**

(30) Priorité: **08.07.81 FR 8113385**
**16.09.81 FR 8117478**

(43) Date de publication de la demande:
**12.01.83 Bulletin 83/2**

(45) Mention de la délivrance du brevet:
**17.04.85 Bulletin 85/16**

(84) Etats contractants désignés:
**DE FR GB IT**

(56) Documents cités:
**CH - A - 235 420**
**DE - B - 1 220 273**
**FR - A - 2 447 305**
**US - A - 3 155 110**
**US - A - 3 159 176**
**US - A - 3 855 798**

(73) Titulaire: **SOCIETE ANONYME D.B.A., Centre Paris Pleyel, F-93521 St-Denis Cédex 01 (FR)**

(72) Inventeur: **Carré, Jean-Jacques, 59 Bd de l'Est, F-93340 Le Raincy (FR)**
Inventeur: **Levrai, Roland, 9 bis, Avenue Monmousseau, F-93240 Stains (FR)**

(74) Mandataire: **Le Moenner, Gabriel et al, SERVICE BREVETS BENDIX 44, Rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

**Description**

L'invention se rapporte aux soupapes de maintien de pression résiduelle pour des ensembles générateurs de pression pour installation de freinage hydraulique d'un véhicule automobile.

Dans les installations de freinage hydraulique, notamment pour véhicules équipés de freins à tambour, il est courant de prévoir entre le maître-cylindre et les moteurs de freins une soupape de maintien de pression résiduelle, dont la rôle est de maintenir, même en l'absence de freinage, une certaine pression dans les moteurs de freins. Cette disposition permet de réduire l'absorption du circuit de freinage et donc la course de l'organe d'actionnement du maître-cylindre ainsi que le temps de réponse de l'installation de freinage. De telles soupapes comprennent un élément de fermeture situé du côté du maître-cylindre et sollicité par des moyens élastiques tarés vers un siège situé du côté des moteurs de freins.

Une valve à sens unique assure le passage de fluide sans restriction du maître-cylindre vers les freins. De manière à rendre l'ensemble aussi compact que possible, la valve à sens unique peut être logée dans l'élément de fermeture lui-même.

Un exemple typique de ce genre de soupapes est représenté dans le brevet FR-A-2 161 958. Dans cet exemple, l'élément de fermeture dont le corps est réalisé en matériau élastomère, comporte une ouverture centrale et la valve à sens unique consiste en une paire de lèvres jointives venues de matière avec le corps de l'élément de fermeture qui s'étendent en direction des moteurs de freins en obturant l'ouverture centrale. Ce type de valve est communément appelé »à lèvres en bec de canard«.

Ces soupapes sont malheureusement incompatibles avec les techniques récentes de remplissage des installations de freinage par mise au vide préalable.

En effet, lors de la mise au vide, opération qui s'effectue en général à partir du réservoir du maître-cylindre, la soupape de maintien dont le ressort est taré pour contenir vers les freins une pression de quelques bars rend impossible l'évacuation de l'air contenu dans les freins et les conduits qui les desservent.

Pour pallier cet inconvénient, l'invention propose une soupape de maintien de pression résiduelle pour un ensemble générateur de pression pour installation de freinage hydraulique d'un véhicule automobile et destiné à être interposée dans un conduit reliant ladite source à au moins un moteur de frein de véhicule, ladite soupape comprenant un boîtier pourvu d'un orifice d'entrée destiné à être relié à une source de pression, d'un orifice de sortie destiné à être relié audit moteur, d'une chambre entre lesdits orifices et d'un siège de soupape situé du côté dudit orifice de sortie, un élément de fermeture étant monté dans ladite chambre en regard dudit siège et sollicité par des moyens élastiques vers ce dernier, caractérisé en ce qu'il comprend des moyens provisoires de retenue contenant la force desdits moyens élastiques, lesdits moyens provisoires de retenue étant sensibles à au moins la présence de liquide de freinage dans ladite chambre pour libérer lesdits moyens élastiques.

L'invention sera décrite en se référant aux Figures annexées:

La Figure 1 est une vue schématique d'une installation de freinage incorporant un ensemble générateur de pression selon l'invention; et

Les Figures 2, 3, 4 et 5 sont des vues en coupe agrandie de quatre modes de réalisation de soupapes incorporées dans l'installation de freinage de la Figure 1.

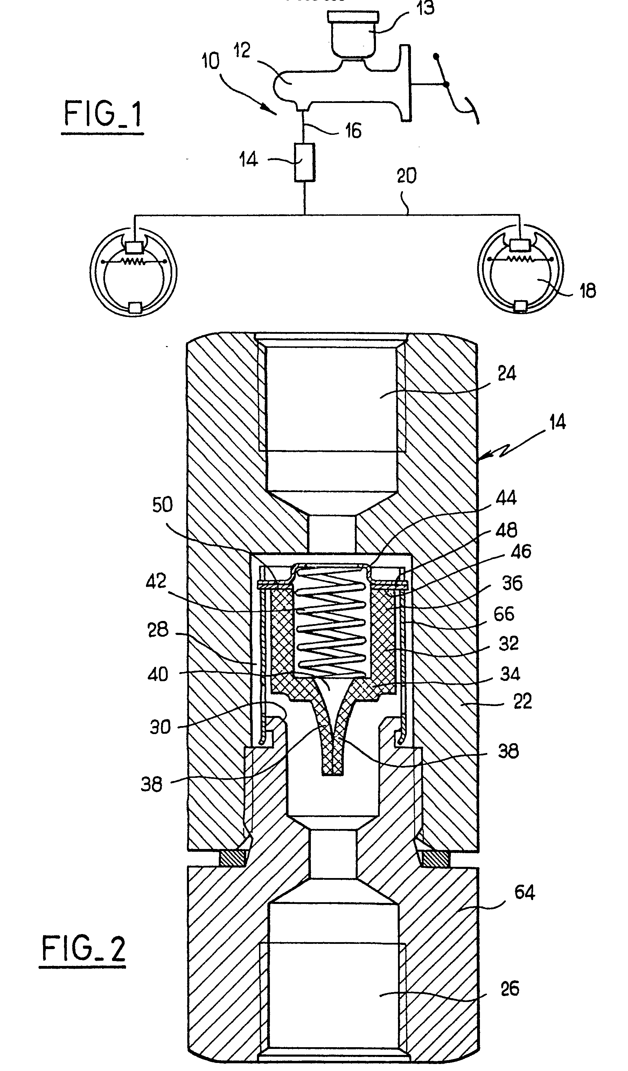

L'installation de freinage 10 représentée schématiquement à la Figure 1 comprend un maître-cylindre 12, ou source de pression, une soupape de maintien de pression résiduelle 14, un premier conduit 16 reliant le maître-cylindre 12 et la soupape 14, et au moins un frein 18, un second conduit 20 reliant la soupape 14 au frein 18. De manière conventionnelle, un réservoir de liquide de freinage 13 est fixé au maître-cylindre 12.

Un premier mode de réalisation de la soupape 14 est représenté à la Figure 2. Cette soupape comprend un boîtier 22 pourvu d'un orifice d'entrée 24 relié au conduit 16 et d'un orifice de sortie 26 relié au conduit 20.

Entre ces deux orifices est définie une chambre 28 et un siège de soupape 30 est défini dans le boîtier du côté de l'orifice de sortie 26.

Un élément de fermeture 32, réalisé en matériau élastomère, est logé dans la chambre 28. Il comprend une partie centrale 34, ayant sensiblement la forme d'un disque, destinée à coopérer avec le siège 30, une partie annulaire s'étendant vers l'orifice d'entrée 24 et une paire de lèvres jointives 38, venues de matière avec la partie centrale 34, bordant en la refermant une ouverture 40 de cette partie centrale. Comme représenté, ces lèvres 38 s'étendent en direction de l'orifice de sortie 26.

De la sorte, se trouve réalisée une valve à sens unique permettant un passage non restreint du fluide depuis l'orifice d'entrée 24 vers l'orifice de sortie 26. Un élément élastique, ou ressort 42 est interposé entre une cuvette 44, fixée au boîtier 22, et la partie centrale 34 de l'élément de fermeture 32 pour solliciter de dernier en direction du siège de soupape 30.

Selon l'invention, l'élément de fermeture 32 est maintenu dégagé du siège 30 de la manière suivante:

L'extrémité 46 de la partie annulaire 36 de l'élément de fermeture est adhérisé à une collerette 48 également solidaire du boîtier 22, au voisinage de la cuvette 44. Le produit d'adhérisation 50 est choisi en particulier suivant les deux critères suivants: en premier lieu, de manière à pouvoir contenir la force du ressort 42, et en second lieu de manière à être dissous par le liquide de freinage utilisé pour le remplissage de l'installation 10.

Ce remplissage est effectué comme suit: en un premier temps, on relie l'installation de freinage à une pompe à vide (non représenté), de préférence en branchant cette dernière sur le réservoir 13 associé au maître-cylindre 12.

Durant cette opération, l'élément de fermeture 32 de la soupape 14 restant dégagé de son siège 30 grâce à l'adhérisation 50, et l'air est évacué de la totalité des composants de l'installation: maître-cylindre 12, conduits 16 et 20, freins 18 et chambre 28 de la soupape 14.

En un deuxième temps, on interrompt la liaison avec la pompe à vide, puis en un troisième temps, on relie l'installation de freinage à une réserve de liquide (non représentée). De la sorte, cette installation se trouve totalement remplie, par aspiration, par le liquide de freinage.

Lorsque ces opérations sont terminées, le produit d'adhérisation 50 est dissous par le liquide de freinage et le ressort 42 repousse l'élément de fermeture 32 en contact avec son siège 30, la soupape 14 pouvant alors remplir sa fonction qui est de contenir dans le conduit 20 et les freins 18 une pression résiduelle entre les applications de freinage.

On constate que le temps nécessaire à la dissolution de l'adhérisation n'est pas critique. En effet, il s'écoule entre le remplissage de l'installation de freinage et la livraison du véhicule à son utilisateur une durée de l'ordre de quelques jours. De fait, des essais ont montré que le dissolution du produit d'adhérisation était effective au bout de 10 à 20 minutes.

On notera que l'adhérisation de l'élément de fermeture 32 sur la collerette 48 constitue ainsi un moyen provisoire de retenue pour contenir le ressort 42.

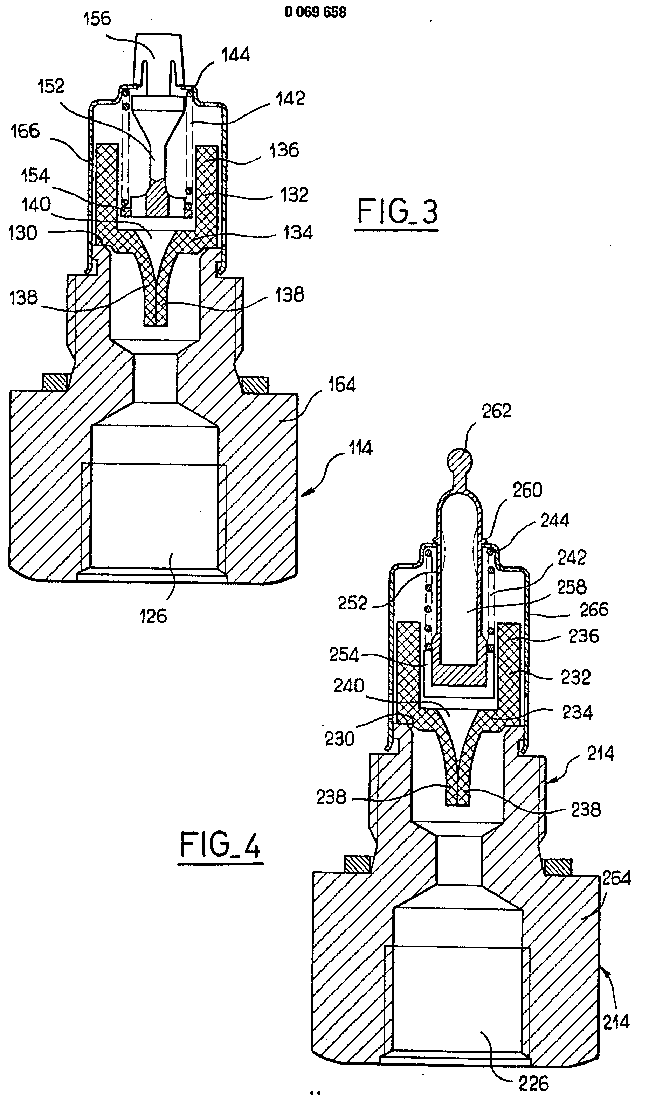

La Figure 3 illustre une variante de soupape dans laquelle des éléments identiques à ceux de la Figure 2 porteront les mêmes numéros de référence augmentés de la valeur 100.

Dans le cas de cette soupape, une tige 152, comprend une tête élargie 154, au voisinage de l'élément de fermeture 132, sur laquelle prend appui le ressort 142, et un embout 156 encliqueté dans la cuvette 144. De la sorte, l'élément de fermeture 132 est libre de se dégager du siège 130 pour permettre l'évacuation de l'air contenu dans le conduit 20 et les freins 18 lors de la mise sous vide de l'installation. Le matériau de la tige 152 est choisi au moins en partie de manière à se dissoudre dans le liquide de freinage. De la sorte, lorsque l'installation est remplie de ce liquide, la tige 152 se rompt et le ressort 142 vient s'appliquer sur la partie centrale 134 de l'élément de fermeture 132 et maintenir celui-ci en appui sur le siège 130.

La Figure 4 illustre une deuxième variante de soupape 214, dans laquelle les éléments identiques à ceux de la Figure 3 porteront les mêmes numéros de références, augmentés de la valeur 100.

Dans le cas de cette soupape, la tige 252 est réalisée en matière plastique et l'intérieur de cette tige est creux pour définir une cativé confinée 258 remplie d'un gaz quelconque. A sa périphérie, la tige 252 comprend un bourrelet 260 maintenu engagé contre la coupelle 244 pour contenir le ressort 242.

Après remplissage de l'installation, comme déjà expliqué, la première application de freinage, par mise en oeuvre du maître-cylindre 12, provoque l'écrasement de la cavité confinée 258 de la tige 252. Dès lors, le bourrelet 260 se déforme radialement vers l'intérieur et la tige 252 étant libérée, le ressort 242 vient appliquer l'élément de fermeture 232 sur le siège 230.

Au sommet de la tige 252, une languette 262 permet, lorsqu'on désire effectuer des tests d'étanchéité de la soupape 214 avant son montage sur le véhicule, de tirer sur la tige 252 jusqu'à ramener le bourrelet au delà de la coupelle 244 et maintenir le ressort 242 en état comprimé. Sur les deux autres modes de réalisation, des tests d'étanchéité peuvent également être pratiqués, à condition naturellement de ne pas utiliser de liquide de freinage pour conduire ces tests.

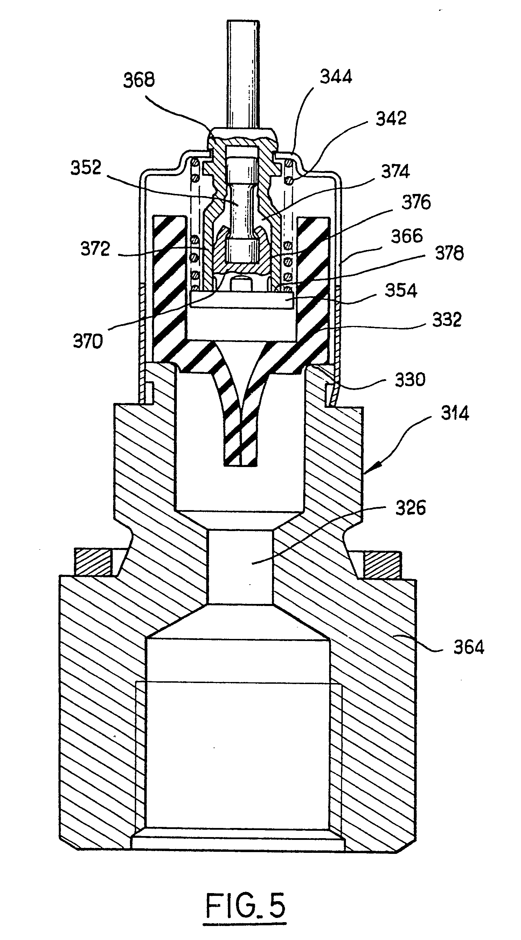

La Figure 5 représente une troisième variante de soupape 314 dans laquelle les éléments identiques à ceux de la Figure 4 porteront les mêmes numéros de référence, augmentés de la valeur 100.

Dans ce mode de réalisation, les moyens provisoires de retenue pour contenir le ressort 342 sont réalisés comme suit:

Deux pièces métalliques 368 et 370 sont serties aux deux extrémités d'une tige 352 réalisée en matériau »réactif«, expression par laquelle on entend que les caractéristiques mécaniques du matériau sont altérées au contact du liquide de freinage, comme il sera explicité ciaprès.

La première pièce métallique 368 est encliquetée dans la coupelle 344 et la second 370 comporte une tête 354 contre laquelle vient prendre appui le ressort 342.

En complément, la première pièce métallique 368 comporte une jupe 372 qui se prolonge autour de la second pièce 370, jusqu'au contact de la tête 354.

De la sorte, la tige 352 se trouve enfermée dans une cavité 374 qui communique avec l'extérieur via des passages de faible section 376 et 378, les premiers (376) étant définis par des cannelures longitudinales à l'extérieur de la seconde pièce 370 ou à l'intérieur de la jupe 372 ou encore en prévoyant un jeu entre la jupe et la seconde pièce, et les seconds (378) étant définis par des entailles radiales en bout de jupe 372 ou sur la tête 354.

Le comportement du dispositif lors du remplissage de l'installation de freinage est le suivant:

Durant la phase de mise au vide, la cavité 374 est également mise sous vide via les passages 376 et 378; durant la phase suivant, dans laquelle l'installation de freinage est mise en communication avec une réserve de liquide de freinage, la cavité 374 se remplit et le liquide de freinage vient au contact de la tige 352 dont la résistance devient inférieure à la force du ressort 342. Il s'ensuit une rupture de la tige 352 et le ressort 342 vient appliquer l'élément de fermeture 332 sur son siège 330. Compte tenu de la composition usuelle du liquide de freinage, parmi les matériaux possibles pour la tige 352, on retiendra en particulier celui connu sous le nom de polysulfone ou encore les matériaux à base de polyméthacrylate.

La présence de la jupe 372 et des passages de faible section 376, 378 procure les avantages suivants:

1) La tige 352 est protégée contre les agents extérieurs au cours des manipulations et du stockage des éléments préassemblés.

2) Lors de la rupture de la tige 352, il peut se produire que des débris se détachent de la zone de rupture; ces débris sont alors emprisonnés dans la cavité 374 et ne peuvent pénétrer dans le circuit de freinage.

3) Des tests d'étanchéité peuvent être pratiqués sur la soupape avant son installation et un utilisant le liquide de freinage lui-même. En effet, lors de ces tests on applique une pression à l'orifice 326, la pièce métallique 368 étant bien entendu libérée par rapport à la coupelle 344, et le liquide de freinage est susceptible de venir en contact avec les pièces 368 et 370, néanmoins la faible section des passages 376 et 378 ne permet pas au liquide de freinage de pénétrer dans la cavité 374. La tige 352 reste par conséquent indemne.

4) Le remplissage de l'installation doit impérativement être effectué par mise au vide préalable. En effet, si l'on utilise des techniques classiques par écoulement gravitationnel ou sous faible pression, la faible section des passages 376, 378 empêche l'évacuation de l'air contenu dans la cavité 374 et le remplissage de celle-ci avec du liquide de freinage, et par voie de conséquence, la rupture de la tige 352 ne se produit pas lors du remplissage.

On notera que cette disposition peut avantageusement s'appliquer au second mode de réalisation (voir Figure 3).

Enfin, les deux éléments 368 et 370 ont été, par commodité, décrits comme réalisés en métal. En fait, il va de soi que tout matériau »non réactif«, c'est-à-dire dont les caractéristiques mécaniques ne sont pas altérées par le contact avec le liquide de freinage, pourra convenir pour ces éléments.

Pour les quatre modes de réalisation on remarquera que la soupape (14, 114, 214, 314) est montée sur un insert (64, 164, 264, 364) formant raccord, que l'on peut fixer soit sur un boîtier (22, 122, 222, 322) comme représenté, soit directement sur la piquage de sortie du maître-cylindre (non représenté).

La coupelle (44, 144, 244, 344) est fixée au raccord (64, 164, 264, 364) grâce à un fourreau ajouré (66, 166, 266, 366) lui-même serti sur le raccord.

## Revendications

1. Soupape de maintien de pression résiduelle (14, 114, 214, 314) pour un ensemble générateur de pression pour installation de freinage hydraulique d'un véhicule automobile et destiné à être interposée dans un conduit (16, 20) reliant ladite source à au moins un moteur de frein de véhicule, ladite soupape comprenant un boîtier (22, 122, 222, 322) pourvu d'un orifice d'entrée (24, 124, 224, 324) destiné à être relié à une source de pression (12), d'un orifice de sortie (26, 126, 226, 326) destiné à être relié audit moteur, d'une chambre (28, 128, 228, 328) entre lesdits orifices et d'un siège de soupape (30, 130, 230, 330) situé du côté dudit orifice de sortie (26, 126, 226, 326), un élément de fermeture (32, 132, 232, 332) étant monté dans ladite chambre (28, 128, 228, 328) en regard dudit siège (30, 130, 230, 330) et sollicité par des moyens élastiques (42, 142, 242, 342) vers ce dernier, caractérisée en ce qu'elle comprend des moyens provisoires de retenue (50, 152, 252, 352) contenant la force desdits moyens élastiques (42, 142, 242, 342), lesdits moyens provisoires de retenue étant sensibles à au moins la présence de liquide de freinage dans ladite chambre (28, 128, 228, 328) pour libérer lesdits moyens élastiques (42, 142, 242, 342).

2. Soupape selon la revendication 1, caractérisée en ce que lesdits moyens provisoires de retenue comprennent un élément (48) monté fixe sur ledit boîtier (22) et auquel ledit élément de fermeture (32) est solidarisé par adhérisation (50), le produit d'adhérisation étant soluble dans le liquide de freinage.

3. Soupape selon la revendication 1, caractérisée en ce que lesdits moyens provisoires de retenue comprennent une tige (152) dont une extrémité (156) est fixée audit boîtier (122) et dont l'autre extrémité, située au voisinage dudit élément de fermeture (132), forme une tête élargie (154) sur laquelle prennent appui lesdits moyens élastiques (142), ladite tige (152) étant, au moins partiellement, réalisée en un matériau soluble dans le liquide de freinage.

4. Soupape selon la revendication 1, caractérisée en ce que lesdits moyens provisoires de retenue comprennent une tige (252) réalisée en matière plastique dont l'extrémité située au voisinage dudit élément de fermeture (232) forme une tête élargie (254) sur laquelle prennent appui lesdits moyens élastiques (242) et dont l'autre extrémité comprend un bourrelet (260) en appui sur ledit boîtier (222), une cavité confinée (258) remplie de gaz étant définie à l'intérieur de ladite tige (252) et au niveau dudit bourrelet (260), dont il résulte que la mise sous pression du liquide de freinage provoque l'écrasement de ladite tige (252) au niveau de ladite cavité (258) et le dégagement dudit bourrelet (260) par rapport audit boîtier (222).

5. Soupape selon la revendication 1, caractérisée en ce que lesdits moyens provisoires de retenue comprennent une tige (352) dont l'extrémité est fixée audit boîtier et dont l'autre extrémité, située au voisinage dudit élément de fermeture (332) forme une tête élargie (354) sur laquelle prennent appui lesdits moyens élastiques (342), ladite tige (352) étant, au moins partiellement, réalisée en un matériau dit »réactif« dont les caractéristiques mécaniques sont affaiblies par le contact avec le liquide de freinage.

6. Soupape selon la revendication 5, caractérisée en ce que ledit matériau réactif est du polysulfone.

7. Soupape selon la revendication 5, caractérisée en ce que ledit matériau réactif est du polymétacrylate.

8. Soupape selon l'une des revendications 3, 5, 6 et 7, caractérisée en ce que la partie de tige (152, 352) réalisée en matériau réactif ou en matériau soluble est enfermée dans une cavité (374) reliée à ladite chambre (128, 328) par un passage de faible section (376, 378).

9. Soupape selon la revendication 8, caractérisée en ce que ladite partie de tige (352) est solidaire à ses deux extrémités de deux éléments (368, 370) dont l'un est fixé audit boîtier (322, 364) et dont l'autre comporte ladite tête (354), l'un desdits éléments comportant une jupe (372) se prolongeant en direction de l'autre élément, ladite cavité (374) étant définie à l'intérieur de ladite jupe (372) et ledit passage (376, 378) de faible section étant défini entre ladite jupe et ledit autre élément.

10. Soupape l'une quelconque des revendications précédentes, caractérisée en ce que ladite source de pression (12) consiste en un maître-cylindre (12) et que ladite soupape (14, 114, 214, 314) est montée sur un piquage de sortie dudit maître-cylindre (12).

11. Soupape selon l'une quelconque des revendications précédentes, caractérisée en ce que ledit boîtier (22, 122, 222, 322) de soupape (14, 114, 214, 314) est réalisé en deux parties: une première partie (22, 122, 222, 322) dans laquelle sont définis ledit orifice d'entrée (24, 124, 224, 324) et ladite chambre (28, 128, 228, 328), et une seconde partie (64, 164, 264, 364) dans laquelle sont définis ledit orifice de sortie (26, 126, 226, 326) et ledit siège (30, 130, 230, 330), ledit élément de fermeture (32, 132, 232, 332), lesdits moyens élastiques (42, 142, 242, 342) et lesdits moyens provisoires de retenue (50, 152, 252, 352) étant montés sur ladite seconde partie (64, 164, 264, 364).

**Patentansprüche**

1. Druckhalteventil (14, 114, 214, 314) für Resthaltedruck für eine Druckerzeugungseinheit zur Installation einer hydraulischen Kraftfahrzeug-Bremsanlage, das in eine Leitung (16, 20) einzusetzen ist, die die Druckerzeugungseinheit mit mindestens einem Fahrzeug-Bremsmotor verbindet, mit einem Gehäuse (22, 122, 222, 322), das versehen ist mit einer Einlaßöffnung (24, 124, 224, 324), die mit einer Druckquelle (12) verbindbar ist, einer Auslaßöffnung (26, 126, 226, 326), die mit dem Bremsmotor verbindbar ist, einer Kammer (28, 128, 228, 328) zwischen den besagten Öffnungen und einem Ventilsitz (30, 130, 230, 330), der auf der Seite der Auslaßöffnung (26, 126, 226, 326) angeordnet ist, einem Schließkörper (32, 132, 232, 332), der in der Kammer (28, 128, 228, 328) gegenüber dem Ventilsitz (30, 130, 230, 330) angeordnet ist und durch elastische Mittel (42, 142, 242, 342) in Richtung auf den letzteren vorgespannt wird, dadurch gekennzeichnet, daß es provisorische Haltemittel (50, 152, 252, 352) aufweist, die die Kraft der elastischen Mittel (42, 142, 242, 342) halten, wobei die provisorischen Haltemittel zumindest auf das Vorhandensein von Bremsflüssigkeit in der Kammer (28, 128, 228, 328) ansprechen, um die elastischen Mittel (42, 142, 242, 342) freizusetzen.

2. Ventil nach Anspruch 1, dadurch gekennzeichnet, daß die provisorischen Haltemittel ein im Gehäuse (22) festgelegtes Element (48) umfassen, mit dem der Schließkörper (32) durch Klebstoff (50) verbunden ist, wobei der Klebstoff in der Bremsflüssigkeit lösbar ist.

3. Ventil nach Anspruch 1, dadurch gekennzeichnet, daß die provisorischen Haltemittel eine Stange (152) umfassen, deren eines Ende (156) am Gehäuse (122) befestigt ist und deren anderes Ende, das benachbart zum Schließkörper (132) angeordnet ist, einen vergrößerten Kopf (154) bildet, an dem die elastischen Mittel (142) angreifen, wobei die Stange (152) zumindest teilweise aus einem in der Bremsflüssigkeit lösbaren Material besteht.

4. Ventil nach Anspruch 1, dadurch gekennzeichnet, daß die provisorischen Haltemittel eine aus Kunststoff bestehende Stange (252) umfassen, deren benachbart zum Schließkörper (232) angeordnetes Ende einen vergrößerten Kopf (254) bildet, an dem die elastischen Mittel (242) angreifen, und deren anderes Ende einen Wulst (260) aufweist, der am Gehäuse (222) anliegt, wobei ein mit Gas gefüllter begrenzter Hohlraum (258) im Inneren der Stange (252) auf Höhe des Wulstes (260) gebildet ist, derart, daß ein Unterdrucksetzen der Bremsflüssigkeit ein Zerbrechen der Stange (252) auf Höhe des Hohlraumes (158) und ein Lösen des Wulstes (260) vom Gehäuse (222) zur Folge hat.

5. Ventil nach Anspruch 1, dadurch gekennzeichnet, daß die provisorischen Haltemittel eine Stange (352) umfassen, deren eines Ende am Gehäuse befestigt ist und deren benachbart zum Schließkörper (332) angeordnetes anderes Ende einen vergrößerten Kopf (354) bildet, an dem die elastischen Mittel (342) angreifen, wobei die Stange (352) zumindest teilweise aus einem sog. »reaktiven« Material besteht, dessen mechanische Eigenschaften durch Berührung mit der Bremsflüssigkeit geschwächt werden.

6. Ventil nach Anspruch 5, dadurch gekennzeichnet, daß das reaktive Material Polysulfon ist.

7. Ventil nach Anspruch 5, dadurch gekennzeichnet, daß das reaktive Material Polymetacrylat ist.

8. Ventil nach einem der Ansprüche 3, 5, 6 und 7, dadurch gekennzeichnet, daß der aus reaktivem oder lösbarem Material bestehende Abschnitt der Stange (152, 352) in einem Hohlraum (374) eingeschlossen ist, der mit der Kammer (128, 328) durch einen Kanal kleinen Querschnitts (376, 378) verbunden ist.

9. Ventil nach Anspruch 8, dadurch gekennzeichnet, daß der besagte Abschnitt der Stange (352) an seinen beiden Enden mit zwei Elementen (368, 370) verbunden ist, von denen das eine am Gehäuse (322, 364) befestigt ist und von denen das andere den Kopf (354) trägt, wobei eines der Elemente ein Hülsenteil (372) umfaßt, das in Richtung des anderen Elementes verlängert ist, wobei der Hohlraum (374) im Inneren des Hülsenteils (372) gebildet ist und der Kanal (376, 378) kleinen Querschnitts zwischen dem Hülsenteil und dem anderen Element gebildet ist.

10. Ventil nach einem der vorhergehenden Ansprüche, dadurch gekennzeichnet, daß die Druckquelle (12) aus einem Hauptbremszylinder (12) besteht und das Ventil (114, 214, 314) an einem Auslaßanschluß des Hauptbremszylinders (12) angebracht ist.

11. Ventil nach einem der vorhergehenden Ansprüche, dadurch gekennzeichnet, daß das Gehäuse (22, 122, 222, 322) des Ventils (14, 114, 214, 314) aus zwei Abschnitten besteht: einem ersten Abschnitt (22, 122, 222, 322), in dem die Einlaßöffnung (24, 124, 224, 324) und die Kammer (28, 128, 228, 328) gebildet ist, und einem zweiten Abschnitt (64, 164, 264, 364), in dem die Auslaßöffnung (26, 126, 226, 326) und der Ventilsitz (30, 130, 230, 330) gebildet sind, wobei der Schließkörper (32, 132, 232, 332), die elastischen Mittel (42, 142, 242, 342) und die provisorischen Haltemittel (50, 152, 252, 352) an dem zweiten Abschnitt (64, 164, 264, 364) angebracht sind.

## Claims

1. Valve for maintaining residual pressure in a pressure generating assembly for a hydraulic vehicle brake installation, intended to be interconnected in a conduit (16, 20) connecting said assembly to at least one vehicle brake motor, said valve comprising a casing (22, 122, 222, 322) provided with an inlet orifice (24, 124, 224, 324) to be connected to a pressure source (12), an outlet orifice (26, 126, 226, 326) to be connected to said motor, a chamber (28, 128, 228, 328) between said orifices and a valve seat (30, 130, 230, 330) disposed on the side of said outlet orifice (26, 126, 226, 326), a closing member (32, 132, 232, 332) being mounted in said chamber (28, 128, 228, 328) facing said seat (30, 130, 230, 330) and biased by resilient means (42, 142, 242, 342) towards the latter, characterized in that it comprises provisional retention means (50, 152, 252, 352) holding the force of said resilient means (42, 142, 242, 342), said provisional retention means being responsive to at least the presence of brake liquid in said chamber (28, 128, 228, 328) for releasing said resilient means (42, 142, 242, 342).

2. Valve according to claim 1, characterized in that said provisional retention means comprise an element (48) fixedly mounted on said casing (22) and to which said closing member (32) is secured by adhesive (50), the adhesive being soluble in the brake liquid.

3. Valve according to claim 1, characterized in that said provisional retention means comprise a rod (152) having one end (156) fixed to said casing (122) and its other end adjacent said closure member (132) form an enlarged head (154) engaged by said resilient means (142), said rod (152) being at least partially made of a material soluble in the brake liquid.

4. Valve according to claim 1, characterized in that said provisional retention means comprise a rod (252) of plastic material having one extremity adjacent said closure member (232) forming an enlarged head (254) engaged by said resilient means (242) and having its other extremity comprise a collar (260) engaging said casing (222), a gas filled confined cavity (258) being defined within said rod (252) adjacent said collar (260) whereby pressurization of the brake liquid results in breaking of said rod (252) adjacent said cavity (258) and in disengagement of said collar (260) with respect to said casing (222).

5. Valve according to claim 1, characterized in that said provisional retention means comprise a rod (252) having one end fixed to said casing and having its other end adjacent said closure member (332) form an enlarged head (354) engaged by said resilient means (342), said rod (352) being at least partially made of a so-called »reactive« material, the mechanical characteristics of which are weakened by contact with the brake liquid.

6. Valve according to claim 5, characterized in that said reactive material is polysulphone.

7. Valve according to claim 5, characterized in that said reactive material is polymetacrylate.

8. Valve according to any of claims 3, 5, 6 and 7, characterized in that the portion of the rod (152, 352) made of reactive or soluble material is enclosed within a cavity (374) connected to said chamber (128, 328) by a passage of small cross-section (376, 378).

9. Valve according to claim 8, characterized in that said portion of the rod (352) is connected at its ends to a pair of elements (368, 370), one of which is fixed to said casing (322, 364) and the other of which comprises said head (354), one of said elements comprising a sleeve (372) being extended in the direction of the other element, said cavity (374) being defined within said sleeve (372) and said passage (376, 378) of small cross-section being defined between said sleeve and said other element.

10. Valve according to any of the preceding claims, characterized in that said pressure source (12) comprises a master cylinder (12) and in that said valve (14, 114, 214, 314) is mounted at an outlet connection of said master cylinder (12).

11. Valve according to any of the preceding claims, characterized in that said casing (22, 122, 222, 322) of the valve (14, 114, 214, 314) is made of two portions: a first portion (22, 122, 222, 322) wherein said inlet orifice (24, 124, 224, 324) and said chamber (28, 128, 228, 328) are defined, and a second portion (64, 164, 264, 364) wherein said outlet orifice (26, 126, 226, 326) and said seat (30, 130, 230, 330) are defined, said closure member (32, 132, 232, 332), said resilient means (42, 142, 242, 342) and said provisional retention means (50, 152, 250, 352) being mounted on said second portion (64, 164, 264, 364).

**0 069 658**

FIG_1

FIG_2

0 069 658

FIG_3

FIG_4

FIG. 5